# EUROPÄISCHE PATENTANMELDUNG

(11) **EP 1 649 754 A1**
(43) Veröffentlichungstag der Anmeldung: **26.04.2006**
(21) Anmeldenummer: 04405653.9
(22) Anmeldetag: 20.10.2004
(51) Int. Cl.: A22B 5/20, B23D 61/02

(54) **Rundmesser, Schneidvorrichtung sowie Verfahren zur Herstellung des Rundmessers**

(71) Anmelder: Delannoy, Denis, 74800 St. Pierre en Faucigny (FR); Constantino, Fabrice, 67000 Strasbourg (FR); Guillaumont, Stéphane, 63920 Peschadoires (FR)
(72) Erfinder: Delannoy, Denis, 74800 St. Pierre en Faucigny (FR); Constantino, Fabrice, 67000 Strasbourg (FR); Guillaumont, Stéphane, 63920 Peschadoires (FR)
(74) Vertreter: Wagner, Wolfgang Heribert

(57) **Zusammenfassung**

Ein als ebene Scheibe aus rostfreiem Stahl ausgebildetes Rundmesser zum Zerlegen von Tierkadavern weist eine umlaufende Verzahnung auf sowie eine ungerade, vorzugsweise zwischen drei und elf liegende Anzahl von gleichmässig über den Umfang verteilten gleichen schlitzartigen Ausnehmungen (4a-g), die vom Umfang her, gegen die Drehrichtung geneigt und leicht konvex, z.B. 25 bis 30mm ins Innere der Scheibe einspringen. Dadurch treten sich im Gebrauch Schwingungen auf, die auch ohne Schränkung der Zähne (1) einen sauberen Schnitt ohne Klebenbleiben von Fleischresten am Rundmesser sicherstellen. Besonders vorteilhaft ist der Einsatz eines erfindungsgemässen Rundmessers in einer tragbaren Schneidvorrichtung, in der es antreibbar gelagert ist. Hergestellt wird das Rundmesser vorzugsweise durch Laserschneiden, wobei es aus Stahlblech ausgeschnitten und zugleich die Zähne (1) und die Ausnehmungen (4a-g) hergestellt werden.

## Beschreibung

### Technisches Gebiet

Die Erfindung betrifft ein Rundmesser zum Zerlegen von Tierkadavern und eine ein derartiges Rundmesser umfassende Schneidvorrichtung sowie ein Verfahren zur Herstellung eines erfindungsgemässen Rundmessers. Gattungsgemässe Rundmesser und Schneidvorrichtungen werden vor allem in Schlachthöfen verwendet.

### Stand der Technik

Ein gattungsgemässes Rundmesser zum Zerlegen von Tierkadavern wird gewöhnlich in einer tragbaren Schneidvorrichtung eingesetzt, welche ein Gehäuse mit einem Handgriff oder auch zwei Handgriffen aufweist, in welchem das Rundmesser drehbar und antreibbar gelagert ist. Der Antrieb kann ein im Gehäuse angeordneter Motor sein oder auch eine von einem stationären Motor zum Gehäuse führende biegsame Welle o.ä.. Andere Einsatzweisen des Rundmessers im Bereich der Fleischverarbeitung sind jedoch nicht ausgeschlossen.

Ein gattungsgemässes Rundmesser ist etwa aus EP 0 515 805 A1 bekannt. Es ist als flache volle Scheibe mit einer sich über den ganzen Umfang erstreckenden Verzahnung ausgebildet. Rundmesser dieser Art sind problematisch, da leicht Fleischreste an ihnen kleben bleiben. Ausserdem können aus Erwärmung und Fliehkraft resultierende Spannungen zu Verformungen, z.B. seitlichen Ausbeulungen führen, die Unwucht und unkontrollierte Vibrationen verursachen können. Zur Vermeidung solcher Vibrationen ist es bekannt, mehrere über den Umfang verteilte gleiche, sich vom Umfang in das Innere des Rundmessers erstreckende Ausnehmungen vorzusehen. Allerdings weisen bekannte Rundmesser immer eine gerade Anzahl derartiger Ausnehmungen auf. Ein Rundmesser dieser Art, mit vier Ausnehmungen, wird z.B. bei der Schneidvorrichtung Freund K 23-02 L eingesetzt.

In den meisten Fällen ist die Verzahnung eines Rundmessers zum Zerlegen von Tierkadavern geschränkt, d.h. das Rundmesser ist nicht eben, sondern die Zähne sind, abwechselnd in entgegengesetzte Richtungen, senkrecht zur Ebene des Rundmesseres leicht abgewinkelt. Die Schränkung verhindert, dass Fleischreste am Rundmesser kleben bleiben, so dass sich eine saubere Schnittfläche ergibt. Sie hat jedoch den Nachteil, dass sie die Schnittbreite vergrössert und somit eine Vergrösserung der Abfallmenge verursacht.

### Darstellung der Erfindung

Der Erfindung liegt die Aufgabe zu Grunde, ein gattungsgemässes Rundmesser anzugeben, an dem, obwohl es völlig eben ist, d.h. keine Schränkung aufweist, keine Fleischreste kleben bleiben, mit dem also ein glatter, sauberer Schnitt geführt werden kann.

Diese Aufgabe wird durch die Merkmale im Kennzeichen des Anspruchs 1 gelöst. Es wurde gefunden, dass bei einem erfindungsgemäss ausgebildeten Rundmesser keine Fleischreste an den Seitenflächen kleben bleiben. Dies scheint daran zu liegen, dass unter dem Einfluss der im Einsatz auf das Rundmesser einwirkenden Kräfte Schwingungen auftreten, welche ein Haftenbleiben von Fleischresten zuverlässig verhindern. Mit dem erfindungsgemässen Rundmesser kann daher ein völlig glatter, sauberer Schnitt geführt werden, dessen Breite aber nicht grösser als unbedingt nötig ist, so dass deutlich weniger Abfall entsteht.

Es hat sich auch gezeigt, dass erfindungsgemässe Rundmesser sehr gut aus rostfreiem Stahl hergestellt werden können, so dass Schutzmassnahmen wie Einfetten nicht erforderlich sind, während bekannte gattungsgemässe Rundmesser gewöhnlich aus sehr hartem Stahl mit hohem Kohlenstoffanteil bestehen, der schon vor dem Einsatz gegen Korrosion geschützt werden muss und unter den noch problematischeren chemischen Bedingungen, wie sie im Einsatz gewöhnlich herrschen, sehr korrosionsanfällig ist und Rostflecken entwickelt, was aus hygienischen Gründen unerwünscht ist.

Besonders geeignet sind gattungsgemässe Rundmesser für den Einsatz in einer Schneidvorrichtung zum Zerlegen von Tierkadavern, wie sie in Anspruch 10 umschrieben ist.

Zur Herstellung eines gattungsgemässen Rundmessers eignet sich vor allem das in Anspruch 13 beschriebene Verfahren. Durch das Laserschneiden wird auch bei rostfreiem Stahl eine grosse Härte der Verzahnung erreicht, so dass das Rundmesser lang einsatzbereit bleibt, ohne dass ein Nachschleifen erforderlich wäre. Eine Beschichtung aus Karbid oder der Einsatz von am Umfang des Rundmessers befestigten Zähnen aus dem gleichen Material ist daher nicht erforderlich.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Draufsicht auf ein erfindungsgemässes Rundmesser und
- Fig. 2: eine Seitenansicht einer erfindungsgemässen Schneidvorrichtung.

### Wege zur Ausführung der Erfindung

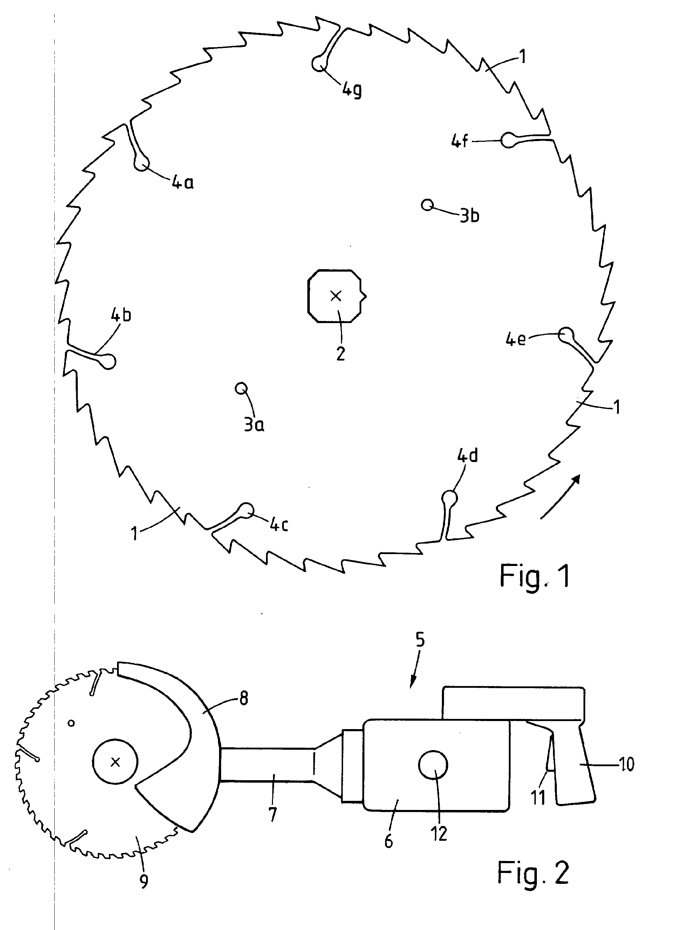

Das erfindungsgemässe Rundmesser ist (Fig. 1) einstückig als flache, im wesentlichen kreisförmige Scheibe von z.B. 1,5mm Dicke aus rostfreiem Stahl, z.B. XC75 ausgebildet. Ihr Durchmesser beträgt z.B. 150mm. Die Abmessungen können natürlich von diesen Werten abweichen. Vorzugsweise liegen sie zwischen 1mm und 2,5mm (Dicke) und 100mm und 500mm (Durchmesser). Am Umfang ist eine durchgehende Verzahnung mit ohne Abstand aufeinanderfolgenden gleichen Zähnen 1 vorgesehen. Die in Drehrichtung (Pfeil) geneigten Zähne 1 liegen in der Ebene der Scheibe, d.h. sie sind nicht geschränkt. In der Mitte weist das Rundmesser eine etwa quadratische Oeffnung 2 auf, welche erlaubt, es in verschiedenen Schneidvorrichtungen einzuspannen. Ausserdem sind zwei einander diametral gegenüberliegende Löcher 3a,b vorhanden, die eine Einspannung des Rundmessers in einem Magazin o.dgl. ermöglichen.

Das Rundmesser weist ausserdem sieben gleiche vom Umfang in das Innere der Scheibe einspringende Ausnehmungen 4a-g auf. Ihre Länge beträgt jeweils ca. 13mm. Sie sind jeweils als Schlitze konstanter Weite, die im Beispiel ca. 1,3mm beträgt, ausgebildet, welche am Ende kreisförmig auf ca. 3,5mm erweitert und gegenüber der radialen Richtung um ca. 20° geneigt sind, und zwar, vom Umfang her gesehen, in Drehrichtung. Ausserdem sind sie leicht gebogen, und zwar in Drehrichtung konvex.

Die Form und die genauen Abmessungen der Ausnehmungen 4a-g können, auch abhängig von den Dimensionen des Rundmessers, variieren. Z.B. kann die Länge zwischen 10mm und 70mm betragen. Vorzugsweise ist sie nicht grösser als 30mm. Werte zwischen 25mm und 30mm haben sich als besonders günstig erwiesen. Wesentlich ist, dass die Anzahl der Ausnehmungen eine ungerade Zahl ist. Bewährt haben sich vor allem Werte zwischen drei und elf. Es scheint, dass sich bei einer solchen Konfiguration im Einsatz seitliche Schwingungen der durch die Ausnehmungen 4a-g getrennten Segmente im Rundmesser ausbilden, welche ein Ankleben von Fleischfasern und anderen Resten verhindern, obwohl die Zähne 1 nicht geschränkt sind.

Erfindungsgemässe Rundmesser können z.B. in tragbaren Schneidvorrichtungen zum Zerteilen von Tierkadavern wie der in Fig. 2 dargestellten eingesetzt werden. Diese Schneidvorrichtung umfasst ein Gehäuse 5 mit einer zylindrischen Trommel 6, welche einen Elektromotor als Antrieb enthält. Mit der Trommel 6 ist über ein Rohr 7, in dem eine Welle gelagert ist, eine Halterung 8 verbunden, in der ein erfindungsgemässes Rundmesser 9 drehbar und antreibbar gelagert ist und die ausserdem eine Abschirmung umfasst. Am entgegengesetzen Ende der Trommel 6 ist ein mit derselben verbundener Handgriff 10 angeordnet, welcher einen Schalter 11 trägt, mittels dessen zum Ein- und Ausschalten des Antriebs der Elektromotor ein- und ausgeschaltet oder auch die Verbindung zwischen demselben und dem Rundmesser 9 geschlossen und getrennt werden kann. Ein weiterer Handgriff 12 ist an der Seite der Trommel 6 befestigt. Eine Bedienungsperson kann so mit der rechten Hand den ersten Handgriff 10 fassen und mit der linken Hand den zweiten Handgriff 12. Mit Zeige- und Mittelfinger der rechten Hand kann der Schalter 11 betätigt werden. Die Schneidvorrichtung ist nur über ein Kabel (nicht dargestellt) mit einem Stromanschluss verbunden und kann daher frei bewegt werden. Aber auch wenn sie zur Entlastung der Bedienungsperson z.B. an einem am Gehäuse angreifenden Stahlseil aufgehängt ist, ist die freie Handhabbarkeit nur geringfügig eingeschränkt. Daneben können erfindungsgemässe Rundmesser auch in Schneidvorrichtungen anderer Art eingesetzt werden.

Die Herstellung eines erfindungsgemässen Rundmessers erfolgt vorzugsweise so, dass es unter Schutzatmosphäre durch Laserschneiden aus Stahlblech herausgeschnitten wird. In einem ersten Arbeitsgang wird dabei die Oeffnung 2 hergestellt. In einem zweiten Arbeitsgang schneidet die Laserschneidmaschine die ganze Umfangslinie entlang, derart, dass in einem Arbeitsgang das Rundmesser aus dem Blech herausgetrennt und die Zähne 1 sowie die Ausnehmungen 4a-g hergestellt werden. Es hat sich gezeigt, dass durch das Laserschneiden die Zähne 1 eine grosse Härte erhalten, so auf eine Nachbearbeitung oder Beschichtung verzichtet werden kann. Die Härte eines erfindungsgemässen Rundmessers beträgt im Inneren der Scheibe typischerweise ca. 46 bis 48 HRC nach DIN EN ISO 6508, am Umfang dagegen 50 bis 53 HRC. Ein Nachschleifen oder -schärfen nach einer bestimmten Einsatzdauer ist nicht vorgesehen. Die Lebensdauer eines erfindungsgemässen Rundmessers beträgt ca. 80 Arbeitsstunden.

### Bezugszeichenliste

- 1: Zahn
- 2: Oeffnung
- 3a,b: Löcher
- 4a-g: Ausnehmungen
- 5: Gehäuse

- 6: Trommel
- 7: Rohr
- 8: Halterung
- 9: Rundmesser
- 10: Handgriff
- 11: Schalter
- 12: Handgriff

## Patentansprüche

1. Rundmesser zum Zerlegen von Tierkadavern unter Drehung des Rundmessers in eine Drehrichtung, welches einstückig als ebene Scheibe aus Stahl mit einer durchgehenden Verzahnung am Umfang und einer mittigen Oeffnung (2) ausgebildet ist, **dadurch gekennzeichnet, dass** es eine ungerade Zahl über den Umfang verteilter, sich von demselben ausgehend nach innen erstreckender schlitzartiger Ausnehmungen (4a-g) aufweist.

2. Rundmesser nach Anspruch 1, **dadurch gekennzeichnet, dass** die Zahl der Ausnehmungen (4a-g) mindestens drei und vorzugsweise höchstens elf beträgt.

3. Rundmesser nach Anspruch 1 oder 2, **dadurch gekennzeichnet, dass** die Ausnehmungen (4a-g) gleich ausgebildet und gleichmässig über den Umfang verteilt sind.

4. Rundmesser nach einem der Ansprüche 1 bis 3, **dadurch gekennzeichnet, dass** die Ausnehmungen (4a-g) jeweils eine Länge aufweisen, welche zwischen 10mm und 70mm und insbesondere zwischen 25mm und 30mm liegt.

5. Rundmesser nach einem der Ansprüche 1 bis 4, **dadurch gekennzeichnet, dass** die Ausnehmungen (4a-g) jeweils gegenüber der radialen Richtung geneigt sind, vorzugsweise vom Umfang her in Drehrichtung.

6. Rundmesser nach einem der Ansprüche 1 bis 5, **dadurch gekennzeichnet, dass** die Ausnehmungen (4a-g), vorzugsweise in Drehrichtung konvex, gebogen sind.

7. Rundmesser nach einem der Ansprüche 1 bis 6, **dadurch gekennzeichnet, dass** die Ausnehmungen (4a-g) jeweils eine konstante Weite aufweisen, vorzugsweise mit Ausnahme eines Endabschnittes, welcher z.B. kreisförmig erweitert ist.

8. Rundmesser nach einem der Ansprüche 1 bis 7, **dadurch gekennzeichnet, dass** sein Durchmesser zwischen 100mm und 500mm beträgt.

9. Rundmesser nach einem der Ansprüche 1 bis 8, **dadurch gekennzeichnet, dass** es ausschliesslich aus rostfreiem Stahl, z.B. XC75 besteht.

10. Tragbare Schneidvorrichtung zum Zerlegen von Tierkadavern, mit einem mit mindestens einem Handgriff (10, 12) versehenen Gehäuse (5) sowie einem Rundmesser (9) nach einem der Ansprüche 1 bis 9, welches im Gehäuse (5) um eine Achse drehbar gelagert und antreibbar ist.

11. Schneidvorrichtung nach Anspruch 10, **dadurch gekennzeichnet, dass** am Gehäuse (5) ein Schalter (11) angeordnet ist, mittels dessen ein Antrieb des Rundmessers (9) ein- und ausgeschaltet werden kann.

12. Schneidvorrichtung nach Anspruch 11, **dadurch gekennzeichnet, dass** der Schalter (11) an einem Handgriff (10) angeordnet ist.

13. Verfahren zur Herstellung eines Rundmessers nach einem der Ansprüche 1 bis 9, **dadurch gekennzeichnet, dass** es durch einen seiner Umfangslinie folgenden Laserschnitt aus Stahlblech herausgeschnitten wird.
